# EUROPEAN PATENT SPECIFICATION

(11) **EP 4 386 902 B1**
(45) Date of publication and mention of the grant of the patent: **30.09.2026**
(21) Application number: 23843286.8
(22) Date of filing: 14.07.2023
(51) Int. Cl.: H01M 4/36, H01M 4/62, H01M 4/131, H01M 10/052, H01M 10/0562, H01M 4/02, H01M 4/505, H01M 4/525, H01M 10/0525

(54) **CATHODE ACTIVE MATERIAL FOR ALL-SOLID-STATE BATTERIES, AND CATHODE FOR ALL-SOLID-STATE BATTERIES AND ALL-SOLID-STATE BATTERY INCLUDING SAME**
KATHODENAKTIVMATERIAL FÜR FESTKÖRPERBATTERIEN UND KATHODE FÜR FESTKÖRPERBATTERIEN UND FESTKÖRPERBATTERIE DAMIT
MATIÈRE ACTIVE DE CATHODE POUR BATTERIES ENTIÈREMENT SOLIDES, ET CATHODE POUR BATTERIES ENTIÈREMENT SOLIDES ET BATTERIE ENTIÈREMENT SOLIDE LA COMPRENANT

(30) Priority: 22.07.2022 KR 20220090983
(43) Date of publication of application: 19.06.2024
(73) Proprietor: LG Energy Solution, Ltd., Seoul 07335 (KR); Korea Electronics Technology Institute, Bundang-gu, Seongnam-si Gyeonggi-do 13509 (KR)
(72) Inventor: LEE, Daejin, Daejeon 34122 (KR); HAH, Hoejin, Daejeon 34122 (KR); CHO, Woosuk, Seongnam-si, Gyeonggi-do 13599 (KR); KIM, Hyun-seung, Seoul 06990 (KR); KIM, Kyungsu, Yongin-si, Gyeonggi-do 16930 (KR); YU, Ji Sang, Seongnam-si, Gyeonggi-do 13600 (KR)
(74) Representative: Goddar, Heinz J.
(86) International application number: PCT/KR2023/010124
(87) International publication number: WO 2024/019437

(56) References cited:
- CN-A- 110 299 518
- CN-A- 113 353 988
- JP-A- 2020 043 052
- KR-A- 20200 007 326
- KR-A- 20200 007 326
- KR-A- 20200 086 111
- KR-A- 20200 130 090
- SAHA SONALI ET AL: "Structural and optical properties of paraelectric SrTiO 3", JOURNAL OF PHYSICS: CONDENSED MATTER, vol. 12, no. 14, 10 April 2000 (2000-04-10), Bristol, GB, pages 3325 - 3336, XP093131297, ISSN: 0953-8984, DOI: 10.1088/0953-8984/12/14/309
- SAHA SONALI, SINHA T P, MOOKERJEE ABHIJIT: "Structural and optical properties of paraelectric SrTiO 3", JOURNAL OF PHYSICS: CONDENSED MATTER, INSTITUTE OF PHYSICS PUBLISHING, BRISTOL, GB, vol. 12, no. 14, 10 April 2000 (2000-04-10), Bristol, GB, pages 3325 - 3336, XP093131297, ISSN: 0953-8984, DOI: 10.1088/0953-8984/12/14/309

## Description

### [Technical Field]

This application claims the benefit of priority based on Korean Patent Application No. 10-2022-0090983 filed on July 22, 2022.

The present invention relates to a positive electrode active material for an all-solid-state battery, a positive electrode for an all-solid-state battery comprising the same, and an all-solid-state battery.

### [Background Art]

Lithium secondary batteries are widely used as a power source for portable devices, including IT mobile devices, and the market has recently grown from small lithium secondary batteries to medium or large secondary batteries. Particularly, the use of batteries for automobiles is rapidly increasing. To be used as a power source for an electric vehicle, a lithium secondary battery requires high energy density and high power characteristics, and it is considered especially important to secure safety.

Conventional lithium secondary batteries use liquid, nonaqueous organic electrolytes, which have the risk of ignition and explosion. Since there are continuous explosion accidents of products applied with this technology, it is urgent to resolve this problem.

An all-solid-state battery refers to a battery in which the liquid organic electrolyte is replaced with a solid one, and all components of the battery including the electrode and the electrolyte are solids. Due to the high safety of the solid electrolyte therein, the risk of ignition or explosion can be fundamentally eliminated.

As a solid electrolyte of an all-solid-state lithium secondary battery, a gel-type polymer electrolyte, or a sulfide- or oxide-based solid electrolyte can be used. Among them, a sulfide-based solid electrolyte has a high lithium ion conductivity of more than 1X10⁻² S/cm, and a wide potential window of more than 5V, which causes less deterioration of characteristics even in extreme environments, and has a great advantage in designing a lithium ion secondary battery having high energy density.

In an all-solid-state battery with such sulfide-based solid electrolyte, capacity is not properly expressed due to high interfacial resistance at the interface between the positive electrode active material and the sulfide-based solid electrolyte. Such interfacial resistance is considered to mainly occur by the following causes: 1) a space charge layer phenomenon in which a lithium deficient layer is formed on the interface of the solid electrolyte due to the difference in chemical potentials of the positive electrode active material and the solid electrolyte, and 2) formation of an interfacial impurity layer due to the chemical reaction at the interface of the positive electrode active material and the solid electrolyte.

Conventionally, in order to solve this problem, the interface between a positive electrode active material and a solid electrolyte was coated with a lithium metal oxide (LiMeₓO_{y}) having lithium ion conductivity as a buffer layer, so as to suppress formation of a space charge layer. However, formation of a space charge layer was not sufficiently suppressed by such method of coating the interface with a lithium metal oxide. Therefore, it is required to develop a new coating material that can suppress the interfacial resistance between a solid electrolyte and a positive electrode active material. The documents CN 110 299 518 and CN 113 353 988 disclose a positive active material having a core and shell structure wherein the shell comprises a material with a cubic phase.The document KR 2020 0007326 discloses a positive active material having a core and shell structure wherein the shell comprises SrTiO_{3˙}

### [Disclosure]

### [Technical Problem]

In order to solve the above problem, the inventors of the present invention have conducted various studies and found that coating the surface of a lithium metal oxide with a dielectric having a cubic structure can reduce the interfacial resistance between a positive electrode active material and a sulfide-based solid electrolyte, and as a result, have completed the present invention.

Accordingly, the present invention aims to provide a positive electrode active material capable of reducing the interfacial resistance between a positive electrode active material and a sulfide-based solid electrolyte, and a positive electrode comprising the same.

Also, the present invention aims to provide an all-solid-state battery comprising the positive electrode, which has excellent initial efficiency, rate characteristics and reproducibility, and is capable of reducing overvoltage.

### [Technical Solution]

To achieve the above objectives,
the present invention provides a positive electrode active material according to claim 1.

In addition, the present invention provides a positive electrode for an all-solid-state battery, the positive electrode comprising the positive electrode active material of the present invention.

Moreover, the present invention provides an all-solid-state battery comprising a positive electrode of the present invention; a negative electrode; and a solid electrolyte layer between these electrodes.

### [Advantageous Effects]

Since the surface of the positive electrode active material of the present invention is coated with a dielectric with a cubic structure, the resistance generated at the interface between the sulfide-based solid electrolyte and the positive electrode active material can be reduced.

Furthermore, an all-solid-state battery comprising the positive electrode active material of the present invention can improve initial efficiency, rate characteristics and reproducibility, and can reduce overvoltage.

### [Description of Drawings]

FIG. 1 is a diagram schematically showing the direction of dipole formation in a dielectric as a result of voltage application.
FIG. 2 is an SEM image of the positive electrode active material of Example 1.
FIG. 3 is an SEM image of the positive electrode active material of Example 2.
FIG. 4 is an SEM image of the positive electrode active material of Comparative Example 1.
FIG. 5 is an SEM image of the positive electrode active material of Comparative Example 2.
FIG. 6 is a graph of the XRD patterns of the positive electrode active materials of Example 1, Example 2 and Comparative Example 2.
FIG. 7 is a graph of the initial charge and discharge curves of the all-solid-state batteries of Example 1, Example 2, Comparative Example 1 and Comparative Example 2.
FIG. 8 is a graph of initial irreversible capacities of the all-solid-state batteries of Example 1, Example 2, Comparative Example 1 and Comparative Example 2.
FIG. 9 is a graph of the initial charge and discharge reproducibility of the all-solid-state battery of Example 1.
FIG. 10 is a graph of the initial charge and discharge reproducibility of the all-solid-state battery of Comparative Example 2.
FIG. 11 is a graph of the discharge curves of the all-solid-state batteries at 0.05C and 2C of Example 1, Example 2 and Comparative Example 2.
FIG. 12 is a schematic diagram of an exploded perspective view of an all-solid-state battery manufactured in this embodiment.

### [Best Mode]

The present invention is described in detail hereinafter.

An all-solid-state battery uses a solid electrolyte to conduct lithium ions, and accordingly, the movement of lithium ions caused by charge and discharge occurs in a solid state. That is, in an all-solid-state battery, lithium ions can move only through an actual contact area between a positive electrode and a solid electrolyte. Therefore, the performance of an all-solid-state battery can be improved by minimizing the interfacial resistance between a positive electrode and a solid electrolyte.

Accordingly, the present invention aims to provide a positive electrode active material that can reduce the interfacial resistance of a positive electrode and a solid electrolyte.

### Positive Electrode Active Material for All-Solid State Battery

The present invention relates to a positive electrode active material for an all-solid-state battery, the positive electrode active material comprising: a core portion comprising a lithium metal oxide; and a coating portion comprising a dielectric having a cubic structure on a surface of the core portion.

The positive electrode active material of the present invention has a core-shell structure, wherein the core portion may include a lithium metal oxide, and the coating portion corresponding to the shell may include a dielectric having a cubic structure.

The lithium metal oxide is a material capable of inserting and detaching lithium ions, and is not particularly limited as long as it can be used as a positive electrode active material for a lithium ion secondary battery.

Preferably, the lithium metal oxide may be a compound represented by Formula 2.

[Formula 2] LiₓM_{y}O₂,

wherein M includes at least one selected from the group consisting of Co, Mn, Ni, Al, Fe, V, Zn, Cr, Ti, Ta, Mg, Mo, Zr, W, Sn, Hf, Nd and Gd,
wherein 0<x≤1.5, and
wherein 0<y≤1.

Furthermore, in Formula 2, M may preferably comprise at least one selected from the group consisting of Co, Mn and Ni.

Specific examples of formula 2 may include a layered compound such as a lithium cobalt oxide (LiCoO₂) or a lithium nickel oxide (LiNiO₂), or a compound substituted with other transition metals, such as Li₁₊ₐ[NiₓMn_{y}Co_{(1-x-y)}]M_{z}O₂ (wherein 0≤a≤0.2, 0.4≤x≤0.9, 0<x+y<1, M is at least one element selected from the group consisting of Co, Mn, Ni, Al, Fe, V, Cr, Ti, Ta, Mg, Mo, Zr, W, Sn, Hf, Nd and Gd, and 0≤z≤0.1).

In one embodiment of the present invention, the lithium metal oxide, independently or simultaneously with the lithium metal oxide of Formula 2, may further comprise one or two or more selected from the group consisting of a lithium manganese oxide such as Li₁₊ₓMn₂₋ₓO₄ (wherein 0≤x≤0.33), Li_{1.1}Mn_{1.9}O₄ or LiMn₂O₄; a lithium copper oxide (Li₂CuO₂); a vanadium oxide such as LiV₃O₈, V₂O₅ or Cu₂V₂O₇; a lithium nickel oxide, LiNi₁₋ₓMₓO₂ (wherein M is Co, Mn, Al, Cu, Fe, Mg, B, Zr or Ga, and 0.1≤x≤0.3); a lithium manganese composite oxide represented by LiMn₂₋ₓMₓO₂ (wherein M is Co, Ni, Fe, Cr, Zn, Zr or Ta, and 0.01≤x≤0.1) or Li₂Mn₃MO₈ (wherein M is Fe, Co, Ni, Cu, Zr or Zn); a lithium manganese composite oxide having a spinel structure represented by LiNiₓMn₂₋ₓO₄; LiMn₂O₄ in which a portion of Li is substituted with an alkaline earth metal ion; a disulfide compound; and Fe₂(MoO₄)₃.

The coating portion coated on the surface of the core portion includes a dielectric with a cubic structure.

That is, the positive electrode active material for an all-solid-state battery of the present invention is a lithium metal oxide coated with a dielectric having a cubic structure. The coating suggests that a dielectric with a cubic structure is physically and/or chemically bonded to the surface of the core portion. More specifically, the dielectric with a cubic structure is distributed in the form of an island type on the surface of the core portion, and may be spaced apart from each other at a predetermined interval.

When the surface of the lithium metal oxide is coated with the dielectric having a cubic structure in the form of an island type, the concentration of lithium increases around the area coated with the dielectric, thereby securing a passage for lithium ions, so that the interfacial resistance of the sulfide-based solid electrolyte can be reduced.

If the surface of the core portion is coated by the dielectric having a cubic structure in the form of a layer covering the entire surface, the interfacial resistance may increase due to the difficulty in securing a passage for lithium, and accordingly, output characteristics may be deteriorated.

The dielectric with a cubic structure may have paraelectricity.

As the dielectric has paraelectricity, an all-solid-state battery comprising same can suppress irreversible reactions during the initial charging stage, thereby resulting in improved initial efficiency.

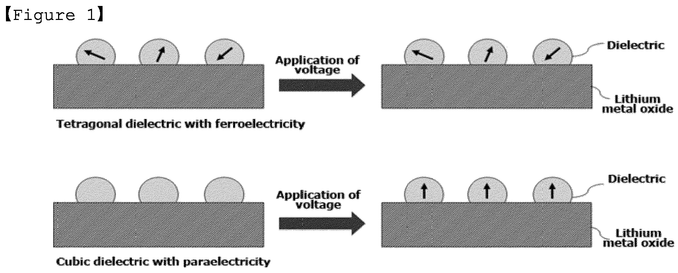

FIG. 1 is a diagram schematically showing the direction of dipole formation in the dielectric when a voltage is applied to a positive electrode active material in which the surface of a lithium metal oxide is coated with a tetragonal dielectric or a positive electrode active material in which the surface of a lithium metal oxide is coated with a cubic dielectric.

The tetragonal dielectric has ferroelectricity, and the cubic dielectric has paraelectricity.

In FIG. 1, since the tetragonal dielectric has ferroelectricity, it has a pre-determined direction of dipole, and the direction of dipole on the surface of the lithium metal oxide is randomly distributed according to the direction to which the tetragonal dielectric is coated. Therefore, the orientation of the dipole does not change under the voltage applied during charge and discharge of the all-solid-state battery, and depends on the orientation to which the surface of the lithium metal oxide is coated. As the orientation of the dipole is randomly distributed, there is a problem of low reproducibility when charging and discharging an all-solid-state battery.

On the other hand, the cubic dielectric has paraelectricity, so it does not have a dipole property before the voltage is applied, and the dipole is arranged in the vertical direction under the voltage applied during charge and discharge. Thus, the cubic dielectric can secure uniform dielectric properties, so it can achieve high reproducibility when charging and discharging an all-solid-state battery.

In other words, the present invention includes a dielectric having a cubic structure with paraelectricity, and accordingly, it can provide an all-solid-state battery with excellent reproducibility.

The dielectric having a cubic structure with paraelectricity of the present invention preferably has a dielectric constant of 100 to 400 at 25°C.

The dielectric having a cubic structure may exemplary comprise at least one selected from the compounds represented by Formula 1.

[Formula 1] ABO₃,

wherein A is at least one selected from the group consisting of Ba, Pb, K, Na, Bi, Sr, Ca and La,
wherein B is at least one selected from the group consisting of Ti, Nb, Ta, Fe, Zr, Bi, Ca, Ru, Pr and Sn,
wherein A and B are different from each other.

Formula 1 preferably includes at least one selected from the group consisting of BaTiO₃, SrTiO₃, PbTiO₃, KNbO₃, NaTaO₃, BiFeO₃ and PbZrTiO₃, and according to the invention it includes at least one selected from the group consisting of BaTiO₃ and SrTiO₃.

Further, the dielectric having a cubic structure may have an average particle size of 1 to 100 nm, preferably 3 to 80 nm, most preferably 25 to 60 nm. Since the dielectric having a cubic structure has an average particle size of 1 to 100 nm, the surface of the lithium metal oxide can be uniformly coated. If the average particle size is less than 1 nm, the dielectrics are too small, thereby agglomerating with each other, resulting in failure to reduce interfacial resistance, and if the average particle size exceeds 100 nm, some portions will remain uncoated on the surface of the lithium metal oxide, which is undesirable.

Further, the dielectric of the cubic structure may be comprised in an amount of from 0.5 to 5 wt%, preferably from 2 to 3 wt%, of the total weight of the positive electrode active material. The interfacial resistance can be reduced within the amount range of 0.5 to 5 wt%, while the interfacial resistance increases outside the above range, so that the electrochemical properties of an all-solid-state battery comprising same cannot be improved.

The positive electrode active material for an all-solid-state battery of the present invention can be prepared by the following steps.

First, a lithium metal oxide and a cubic dielectric are dispersed in a suitable solvent to prepare a dispersion. The solvent is not particularly limited as long as it can be quickly removed without degrading the electrochemical properties of the lithium metal oxide.

In one embodiment of the present invention, the materials may preferably be prepared by stirring so that the material powder does not aggregate and has a uniform dispersed phase in a solvent. The dispersion is then heated to about 50°C to 100°C, and the solvent is removed by evaporation while the above temperature is maintained. In one embodiment of the present invention, the dispersion is preferably stirred to prevent the material powder from precipitating during the removal of the solvent from the dispersion. After removing the solvent, the resulting product is sintered at about 300°C to 500°C. However, a method of manufacturing a positive electrode active material is not limited to the above method, and any method can be utilized without limitation as long as a positive electrode active material having the above described structure can be obtained.

### Positive Electrode for All-Solid-State Battery

The present invention also relates to a positive electrode for an all-solid-state battery, wherein the positive electrode may comprise the positive electrode active material of the present invention as described above, a sulfide-based solid electrolyte and a conductive material.

Further, the positive electrode may further comprise a binder resin, as needed.

The solid electrolyte may comprise a polymeric solid electrolyte and/or an inorganic solid electrolyte, preferably an inorganic solid electrolyte. The inorganic solid electrolyte may include a sulfide-based solid electrolyte or an oxide-based solid electrolyte, and in the present invention, the solid electrolyte may preferably include a sulfide-based solid electrolyte.

The polymeric solid electrolyte comprises a polymeric resin and a lithium salt, and may be a solid polymeric electrolyte in the form of a mixture of a solvated lithium salt and a polymeric resin, or a polymeric gel electrolyte in which an organic electrolyte containing an organic solvent and a lithium salt is added to a polymeric resin.

The sulfide-based solid electrolyte comprises sulfur atoms among electrolyte components, but is not limited to a particularly specific component, and may include one or more of a crystalline solid electrolyte, an amorphous solid electrolyte (glassy solid electrolyte) or a glass-ceramic solid electrolyte. Specific examples of the sulfide-based solid electrolyte may comprise, but are not limited to, an LPS-type sulfide containing sulfur and phosphorus, Li₄₋ₓGe-PₓS₄ (wherein 0.1≤x≤2, specifically 2/3≤x≤3/4), Li_{10±1}MP₂X₁₂ (wherein M is Ge, Si, Sn or Al, and X is S or Se), Li_{3.833}Sn_{0.833}AS_{0. 166}S₄, Li₄SnS₄, Li_{3.25}Ge_{0.25}P_{0.75}S₄, Li₂S-P₂S₅, B₂S₃-Li₂S, xLi₂S-(100-x)P₂S₅ (wherein 70≤x≤80), Li₂SSiS₂-Li₃N, Li₂S-P₂S₅-LiI, Li₂S-SiS₂-LiI, Li₂S-B₂S₃-LiI, and Li_{3.25}Ge_{0.25}P_{0.75}S₄.

The oxide-based solid electrolyte is an LLTO-based compound such as (La,Li)TiO₃, Li₆La₂CaTa₂O₁₂, Li₆La₂ANb₂O₁₂ (wherein A=Ca, Sr), Li₂Nd₃TeSbO₁₂, Li₃BO_{2.5}N_{0.5}, Li₉SiAlO₈, an LAGP-based compound (Li₁₊ₓAlₓGe₂₋ₓ(PO₄)₃, wherein 0≤x≤1, and 0≤y≤1), an LATP-based compound such as Li₂OAl₂O₃-TiO₂-P₂O₅ (Li₁₊ₓAlₓTi₂₋ₓ(PO₄)₃, wherein 0≤x≤1, and 0≤y≤1), Li₁₊ₓTi₂₋ₓAlₓSi_{y}(PO₄)_{3-y} (wherein 0≤x≤1, and 0≤y≤1), LiAlₓZr₂₋ₓ(PO₄)₃ (wherein 0≤x≤1, and 0≤y≤1), LiTiₓZr₂₋ₓ(PO₄)₃ (wherein 0≤x≤1, and 0≤y≤1), Li₃N, LISICON, an LIPON-based compound (Li_{3+y}PO₄₋ₓNₓ, wherein 0≤x≤1, and 0≤y≤1), a perovskite-based compound ((La, Li)TiO₃), or a nasicon-based compound such as LiTi₂(PO₄)₃, and may include at least one from an LLZO-based compound including lithium, lanthanum, zirconium and oxygen as components.

The conductive material is not particularly limited as long as it has conductivity without causing chemical changes in a battery comprising the material. For example, the conductive material may include one or two or more mixtures selected from the group consisting of graphite, such as natural graphite or artificial graphite; a carbon black, such as carbon black, acetylene black, ketjhen black, channel black, furnace black, lamp black or summer black; a conductive fiber, such as a carbon fiber like a vapor grown carbon fiber (VGCF) or a metal fiber; a metal powder, such as carbon fluoride, aluminum, or nickel powder; a conductive whiskey, such as zinc oxide or potassium titanate; a conductive metal oxide, such as titanium oxide; and a conductive material, such as a polyphenylene derivative.

### All-solid-state battery

The present invention also relates to an all-solid-state battery comprising a positive electrode; a negative electrode; and a solid electrolyte layer between these electrodes.

The negative electrode includes a negative electrode active material, a solid electrolyte, and a conductive material, wherein the negative electrode active material can be any material that can be used as a negative electrode active material of a lithium ion secondary battery. For example, the negative electrode active material may be one or two or more selected from the group consisting of carbon, such as anthracite carbon or graphitized carbon; a metal composite oxide such as LiₓFe₂O₃ (wherein 0≤x≤1), LiₓWO₂ (wherein 0≤x≤1), or SnₓMe₁₋ₓMe'_{y}O_{z} (wherein Me is Mn, Fe, Pb, or Ge; Me' is Al, B, P, Si, elements of groups 1, 2 and 3 of the periodic table, or halogen; 0<x≤1; 1≤y≤3; and 1≤z≤8); a lithium metal; a lithium alloy; a silicon-based alloy; a tin-based alloy; an indium-based alloy; a metal oxide such as SnO, SnO₂, PbO, PbO₂, Pb₂O₃, Pb₃O₄, Sb₂O₃, Sb₂O₄, Sb₂O₃, GeO, GeO₂, Bi₂O₃, Bi₂O₄ or Bi₂O₅; a conductive polymer such as polyacetylene; an Li-Co-Ni based material; a titanium oxide; and a lithium titanium oxide.

A solid electrolyte and a conductive material included in the negative electrode may refer to those described above for the positive electrode.

The solid electrolyte layer comprises an ionically conductive material, wherein the ionically conductive material may comprise a polymeric solid electrolyte and/or an inorganic solid electrolyte component, and can be any material which is used for a solid electrolyte for an all-solid-state battery. In the present invention, the ionically conductive material contained in the solid electrolyte layer may refer to the polymer-based solid electrolyte and the inorganic-based solid electrolyte as described above.

The present invention also provides a battery module including the secondary battery as a unit cell, a battery pack comprising the battery module, and a device comprising the battery pack as a power source.

Specific examples of the device include, but are not limited to, a power tool that moves by the power from an electric motor; electric vehicles including an electric vehicle (EV), a hybrid electric vehicle (HEV), and a plug-in hybrid electric vehicle (PHEV); an electric two-wheeler including an electric bicycle (E-bike) and an electric scooter (E-scooter); an electric golf cart; or a power storage system, etc.

Hereinafter, Examples are presented to further describe the present invention, but the following Examples are provided to illustrate the present invention, but the present invention is not limited thereto.

### <Preparation of All-Solid-State Battery>

### Example 1

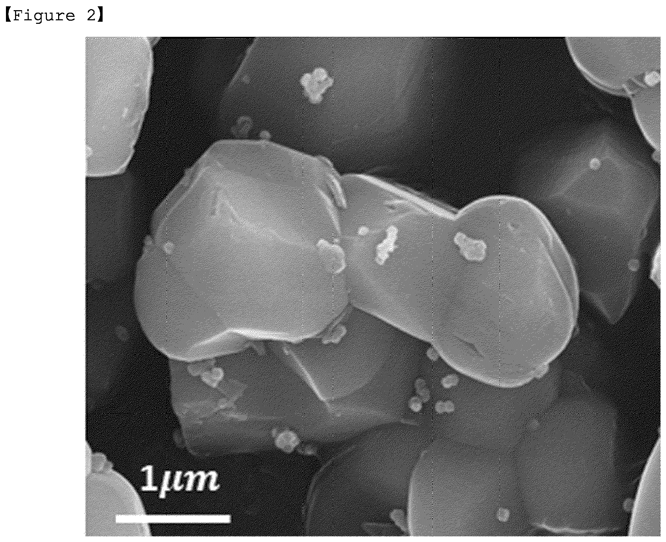

0.05g of BaTiO₃ (MTI Korea) having a cubic structure with an average particle size of 50 to 60 nm and 5g of LiCoO₂ were added to 60 mL of isopropyl alcohol. The agglomerated BaTiO₃ particles were dispersed by using ultrasonication. The isopropyl alcohol was then evaporated by stirring the dispersion at 70°C, and the solvent and other impurities were removed by heat treatment at 400°C for 4 hours in an air atmosphere to prepare a positive electrode active material in which the LiCoO₂ surface was coated with BaTiO₃ particles. At this time, BaTiO₃ was contained in an amount of 1 wt% relative to the total weight of the positive electrode active material. The positive electrode active material was confirmed by using SEM, and it was found that the LiCoO₂ surface was coated with BaTiO₃ (FIG. 2).

A positive electrode composite was prepared by mixing a positive electrode active material, a solid electrolyte, and a conductive material at a weight ratio of 60:35:5, and the surface of an aluminum current collector was coated with the composite to prepare a positive electrode.

The solid electrolyte was Li₆PS₅Cl, the conductive material was Super-P, and the current collector was a composite material in which aluminum mesh and foil are laminated.

As a counter electrode, a thin film of the alloy of lithium and indium (having a thickness of 100*µ*m) was bonded to the surface of a copper-based current collector. The current collector used a composite material in which copper mesh and thin film are laminated.

Next, a solid electrolyte layer was prepared. 100 mg of Li₆PS₅Cl was compressed at a pressure of 250 MPa to form a solid electrolyte layer with a thickness of about 500 µm.

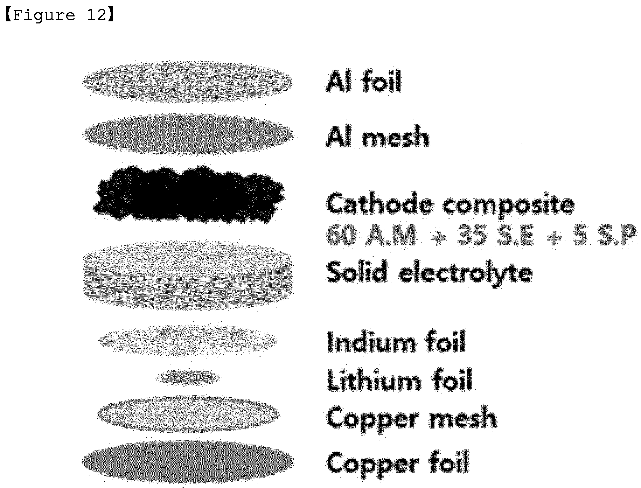

The prepared positive electrode, solid electrolyte layer, and negative electrode were stacked in order in a 10 mm mold type pressure cell and pressurized to a pressure of 440 MPa to produce an all-solid-state battery. FIG. 12 is a diagram schematically showing an exploded perspective view of the battery manufactured in this example.

### Example 2

Except for using SrTiO₃ (Sigma Aldrich) having a cubic structure with an average particle size of 50 to 60 nm, instead of BaTiO₃ having a cubic structure with an average particle size of 50 to 60 nm, the same procedure as in Example 1 was carried out to prepare an all-solid-state battery.

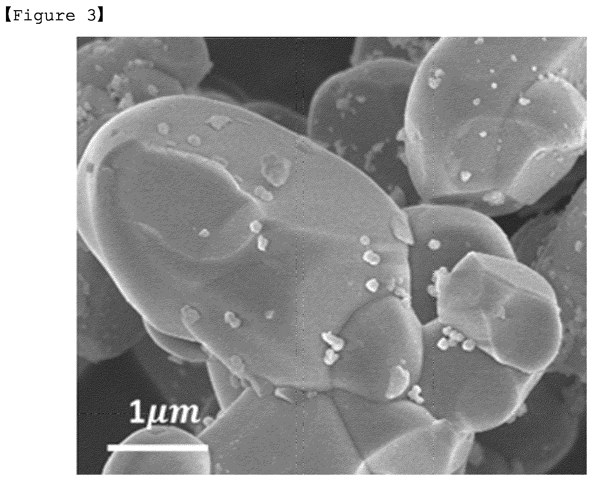

The positive electrode active material was confirmed by using SEM, and it was found that the LiCoO₂ surface was coated with SrTiO₃ (FIG. 3).

### Comparative Example 1

An all-solid-state battery was prepared in the same manner as in Example 1, except that LiCoO₂ was used as a positive electrode active material.

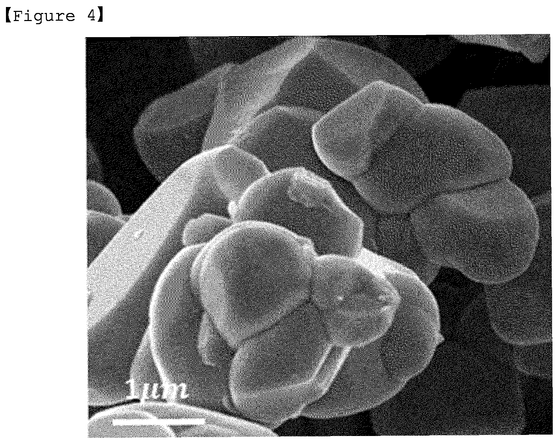

The positive electrode active material was confirmed by using SEM, and only LiCoO₂ particles were observed (FIG. 4).

### Comparative Example 2

An all-solid-state battery was prepared in the same manner as in Example 1, except that BaTiO₃ (Sigma Aldrich) having a tetragonal structure with an average particle size of 50 to 60 nm was used, instead of BaTiO₃ having a cubic structure with an average particle size of 50 to 60 nm.

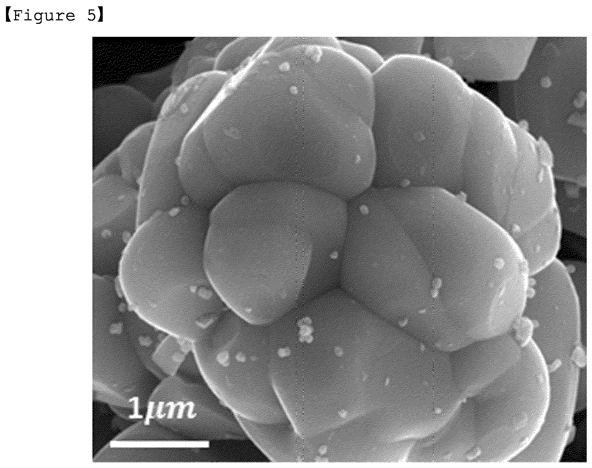

The positive electrode active material was confirmed by using SEM, and it was found that the LiCoO₂ surface was coated with BaTiO₃ (FIG. 5).

### Experimental Example 1. XRD Measurement of Dielectric Coating Material

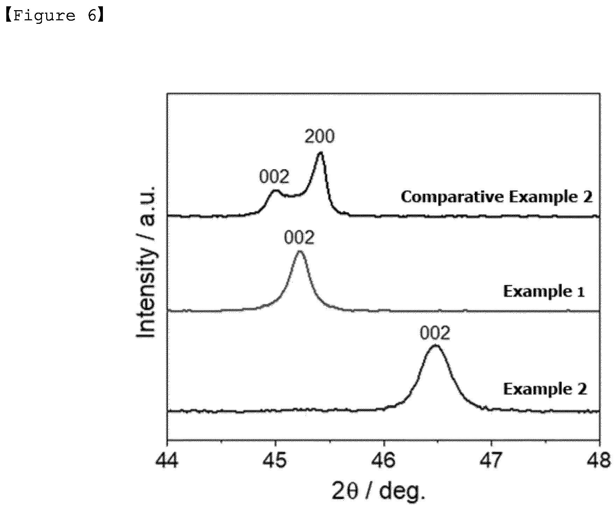

BaTiO₃ and SrTiO₃ with a cubic structure used in Examples 1 and 2, and BaTiO₃ with a tetragonal structure used in Comparative Example 2 were measured by XRD to confirm their crystal structures, and the measurement results are shown in FIG. 6.

BaTiO₃ of Example 1 and SrTiO₃ of Example 2 were observed to have a (002) peak, indicating that they have a cubic structure. BaTiO₃ of Comparative Example 2 was observed to have peaks of (002) and (200), indicating that it has a tetragonal structure.

### Experimental Example 2. Measurement of Initial Charge and Discharge of All-Solid-State Battery

The initial charge and discharge characteristics of the all-solid-state batteries of Example 1, Example 2, Comparative Example 1, and Comparative Example 2 were measured.

The above measurements were carried out in a voltage range of 2.5 to 4.3V (Li/Li⁺) at 0.05C.

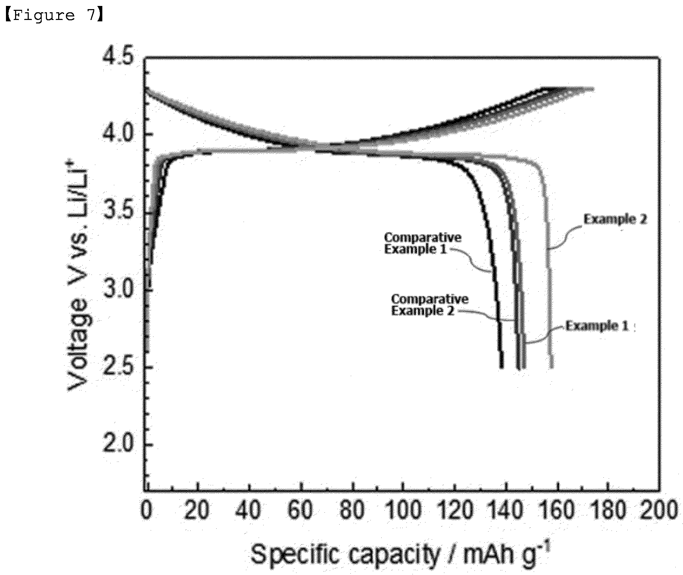

Compared to the all-solid-state battery of Comparative Example 1, the all-solid-state batteries of Example 1, Example 2 and Comparative Example 2 exhibited higher discharge capacities. In addition, the all-solid-state batteries of Examples 1 and 2 exhibited higher discharge capacities than the all-solid-state battery of Comparative Example 2, and that of Example 2 exhibited the highest discharge capacity (FIG. 7).

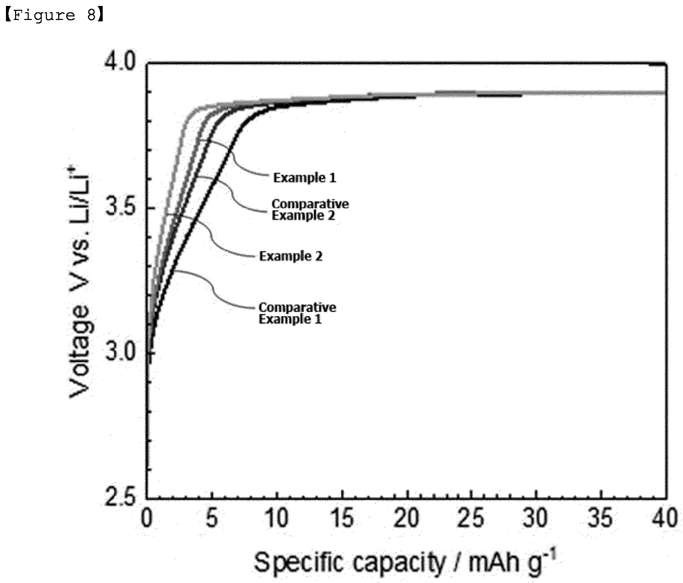

The measurement results of the initial efficiency are shown in Table 1 below, and the capacity at 3.9V or less during initial charge are shown in Table 1 and FIG. 8 below.

**[Table 1]**

| | Example 1 | Example 2 | Comparative Example 1 | Comparative Example 2 |
|---|---|---|---|---|
| Capacity at 3.9V or less during initial charge (mAh/g) | 4.6 | 3.2 | 7.6 | 5.5 |
| Initial efficiency | 86.2% | 90.6% | 85.0% | 86.0% |

According to Table 1, it was confirmed that the irreversible capacity at 3.9V or less during initial charging in the all-solid-state battery of Comparative Example 2 was lower than that in the all-solid-state battery of Comparative Example 1, and the irreversible capacity at 3.9 V or less during initial charge was improved in Example 1. In particular, it was confirmed that the irreversible capacity of the all-solid-state battery of Example 2 was the lowest. Excellent characteristics exhibited in Example 2 compared to Example 1 are attributable to the fact that the dielectric constant of SrTiO₃ with a cubic structure of Example 2 is 300 at 25 °C, the dielectric constant of BaTiO₃ with a cubic structure is 150 at 25 °C, and SrTiO₃ has a higher dielectric constant than BaTiO₃.

In addition, the all-solid-state battery in Example 2 had the highest initial efficiency attributable thereto, which can be seen as a result of suppression of the initial irreversible reaction.

That is, it can be seen that the positive electrode active material in which the surface of lithium metal oxide is coated with a dielectric having a cubic structure suppresses the development of irreversible capacity during the initial charging process.

### Experimental Example 3. Measurement of Reproducibility of All-Solid-State Battery

In order to confirm the reproducibility of the all-solid-state batteries of Example 1 and Comparative Example 2, three all-solid-state batteries prepared by the method of Example 1 and four all-solid-state batteries prepared by the method of Comparative Example 2 were prepared, and the initial charge and discharge characteristics of these batteries were measured by using the same method as in Experimental Example 2 above.

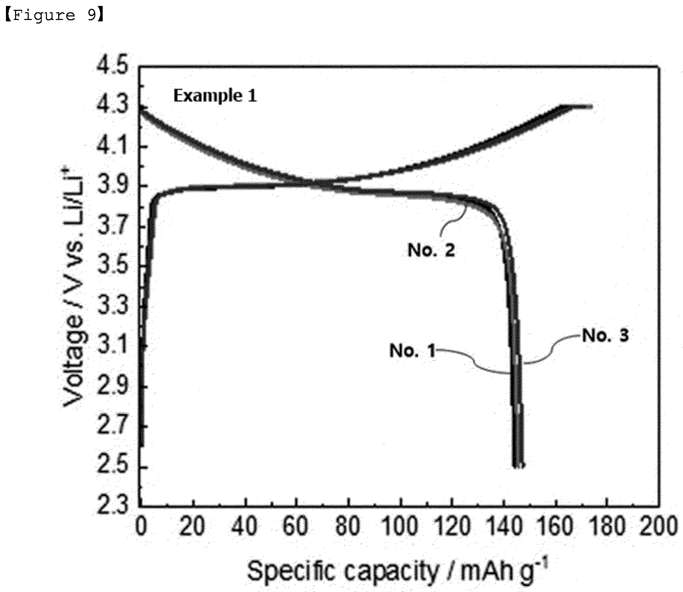

As a result, it was found that the three all-solid-state batteries of Example 1 had the almost same level of charge/discharge capacity and charge/discharge curve behavior (FIG. 9).

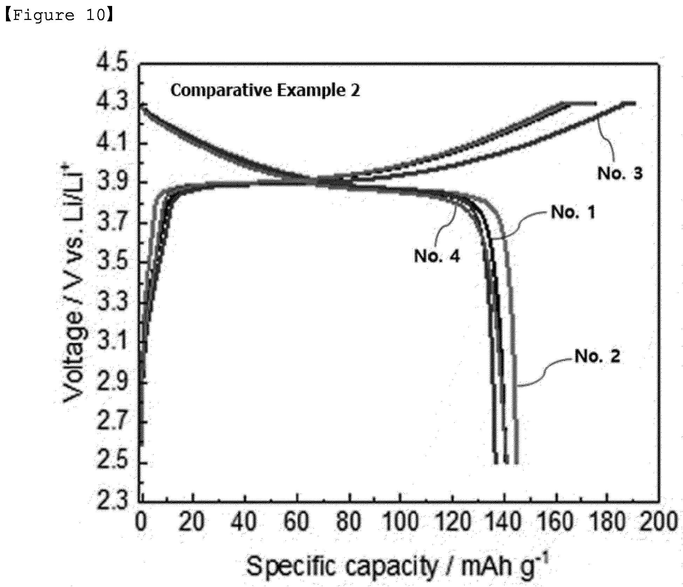

On the other hand, the four all-solid-state batteries of Comparative Example 2 exhibited deviations in charge and discharge capacity depending on the type of battery (FIG. 10).

The difference in reproducibility is due to difference in the crystal structure of the dielectric, which is a coating material of lithium metal oxide.

Specifically, a dielectric having a tetragonal structure with ferroelectricity has poor reproducibility due to irregular distribution of dipole, while a dielectric having a cubic structure with paraelectricity can achieve high reproducibility due to uniform distribution of dipole in the vertical direction.

Therefore, it can be seen that the use of a dielectric having a cubic structure with paraelectricity can secure the reproducibility of the surface of a positive electrode, thereby obtaining characteristics of a superior all-solid-state battery.

### Experimental Example 4. Evaluation of Rate Characteristic Of All-Solid-State Battery

The rate characteristics of the all-solid-state batteries of Example 1, Example 2, and Comparative Example 2 were measured.

The evaluation of rate characteristics was conducted to verify the effects of the dielectric in accordance with crystal structure, specifically to confirm that the interfacial resistance between the positive electrode and the solid electrolyte is reduced depending on the crystal structure of the dielectric coated on the surface of lithium metal oxide.

The above measurements were conducted in a voltage range of 2.5 to 4.3 V (vs Li/Li⁺) at 0.05C and 2C.

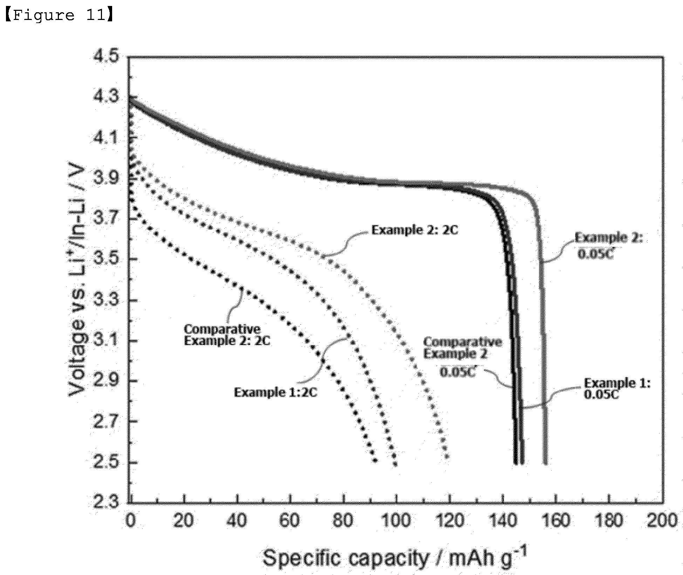

The measurement results are shown in Table 2 and Figure 11 below.

**[Table 2]**

| | Example 1 | Example 2 | Comparative Example 2 |
|---|---|---|---|
| 0.05C (mAh/g) | 147.2 | 156 | 145 |
| 2C (mAh/g) | 99.6 | 119.4 | 92.3 |

The all-solid-state batteries of Example 1 and Comparative Example 2 showed similar results at the low rate of 0.05C, but at the high rate of 2C, the all-solid-state battery of Example 1 showed a higher discharge capacity than the all-solid-state battery of Comparison 2 and a significant improvement in overvoltage. Furthermore, Example 2 exhibited superior properties at both low and high rate conditions compared to Example 1, which are attributable to the fact that SrTiO₃ with a cubic structure has a higher dielectric constant than BaTiO₃ with a cubic structure.

In this regard, it can be seen that a dielectric having a cubic structure with paraelectricity can reduce the interfacial resistance more than a dielectric having a tetragonal structure with ferroelectricity can, thereby providing an all-solid-state battery with improved rate characteristics and improved overvoltage. Moreover, it can be seen that in a dielectric with a cubic structure, the higher the dielectric constant, the more improved effect described above can be achieved.

## Claims

1. A positive electrode active material for an all-solid-state battery, the positive electrode active material comprising:
a core portion comprising a lithium metal oxide; and
a coating portion comprising a dielectric having a cubic structure on a surface of the core portion, and
wherein the dielectric comprises at least one selected from the group consisting of BaTiO₃ and SrTiO₃ having a cubic structure.

2. The positive electrode active material for an all-solid-state battery according to claim 1, wherein the dielectric having a cubic structure has paraelectricity.

3. The positive electrode active material for an all-solid-state battery according to claim 1, wherein the dielectric having a cubic structure with paraelectricity has a dielectric constant of 100 to 400 at 25 °C.

4. The positive electrode active material for an all-solid-state battery according to claim 1, wherein the dielectric having a cubic structure is distributed in the form of an island type on the surface of the core portion and spaced apart from each other at a predetermined interval.

5. The positive electrode active material for an all-solid-state battery according to claim 1, wherein the positive electrode active material comprises a dielectric in an amount of from 0.5 to 5 wt% based on the total weight of the positive electrode active material.

6. The positive electrode active material for an all-solid-state battery according to claim 1, wherein the lithium metal oxide is represented by Formula 2:
[Formula 2] LiₓM_{y}O₂,
wherein M includes at least one selected from the group consisting of Co, Mn, Ni, Al, Fe, V, Zn, Cr, Ti, Ta, Mg, Mo, Zr, W, Sn, Hf, Nd and Gd,
wherein 0 < x ≤ 1.5, and
wherein 0 < y ≤1.

7. A positive electrode for an all-solid-state battery, the positive electrode comprising:
the positive electrode active material according to any one of claims 1 to 7;
a sulfide-based solid electrolyte; and
a conductive material.

8. An all-solid-state battery comprising:
the positive electrode according to claim 8;
a negative electrode; and
a solid electrolyte layer between the positive electrode and the negative electrode.

## Patentansprüche

1. Positivelektrodenaktivmaterial für eine Festkörperbatterie, wobei das Positivelektrodenaktivmaterial Folgendes umfasst:
einen Kernabschnitt, der ein Lithiummetalloxid umfasst; und
einen Beschichtungsabschnitt, der ein Dielektrikum mit einer kubischen Struktur auf einer Oberfläche des Kernabschnitts umfasst, und
wobei das Dielektrikum mindestens eines umfasst, das aus der Gruppe ausgewählt ist, die aus BaTiO₃ und SrTiO₃ mit einer kubischen Struktur besteht.

2. Positivelektrodenaktivmaterial für eine Festkörperbatterie nach Anspruch 1, wobei das Dielektrikum mit einer kubischen Struktur Paraelektrizität aufweist.

3. Positivelektrodenaktivmaterial für eine Festkörperbatterie nach Anspruch 1, wobei das Dielektrikum mit einer kubischen Struktur mit Paraelektrizität eine Dielektrizitätskonstante von 100 bis 400 bei 25 °C aufweist.

4. Positivelektrodenaktivmaterial für eine Festkörperbatterie nach Anspruch 1, wobei das Dielektrikum mit einer kubischen Struktur in der Form eines Inseltyps auf der Oberfläche des Kernabschnitts verteilt ist und voneinander in einem vorbestimmten Intervall beabstandet ist.

5. Positivelektrodenaktivmaterial für eine Festkörperbatterie nach Anspruch 1, wobei das Positivelektrodenaktivmaterial ein Dielektrikum in einer Menge von 0,5 bis 5 Gew.-%, bezogen auf das Gesamtgewicht des Positivelektrodenaktivmaterials, umfasst.

6. Positivelektrodenaktivmaterial für eine Festkörperbatterie nach Anspruch 1, wobei das Lithiummetalloxid durch Formel 2 dargestellt ist:
[Formel 2] LiₓM_{y}O₂ ,
wobei M mindestens eines umfasst, das aus der Gruppe ausgewählt ist, die aus Co, Mn, Ni, Al, Fe, V, Zn, Cr, Ti, Ta, Mg, Mo, Zr, W, Sn, Hf, Nd und Gd besteht,
wobei 0 < x ≤ 1,5, und
wobei 0 < y ≤ 1.

7. Positivelektrode für eine Festkörperbatterie, wobei die Positivelektrode Folgendes umfasst:
das Positivelektrodenaktivmaterial nach einem der Ansprüche 1 bis 7;
einen Festelektrolyten auf Sulfidbasis; und
ein leitfähiges Material.

8. Festkörperbatterie, die Folgendes umfasst:
die Positivelektrode nach Anspruch 8;
eine Negativelektrode; und
eine Festelektrolytschicht zwischen der Positivelektrode und der Negativelektrode.

## Revendications

1. Matériau actif d'électrode positive pour une batterie tout-solide, le matériau actif d'électrode positive comprenant :
une partie noyau comprenant un oxyde de lithium métal ; et
une partie revêtement comprenant un diélectrique ayant une structure cubique sur une surface de la partie noyau, et
où le diélectrique comprend un ou plusieurs éléments sélectionnés dans le groupe constitué de BaTiO₃ et SrTiO₃ ayant une structure cubique.

2. Matériau actif d'électrode positive pour une batterie tout-solide selon la revendication 1, où le diélectrique ayant une structure cubique a une paraélectricité.

3. Matériau actif d'électrode positive pour une batterie tout-solide selon la revendication 1, où le diélectrique ayant une structure cubique ayant une paraélectricité a une constante de diélectrique de 100 à 400 à 25°C.

4. Matériau actif d'électrode positive pour une batterie tout-solide selon la revendication 1, où le diélectrique ayant une structure cubique est distribué sous la forme d'un type îlot sur la surface de la partie noyau et espacé l'un de l'autre à un intervalle prédéterminé.

5. Matériau actif d'électrode positive pour une batterie tout-solide selon la revendication 1, où le matériau actif d'électrode positive comprend un diélectrique dans une quantité de 0,5 à 5 % en poids sur la base du poids total du matériau actif d'électrode positive.

6. Matériau actif d'électrode positive pour une batterie tout-solide selon la revendication 1, où l'oxyde de lithium métal est représenté par la Formule 2 :
[Formule 2] LiₓM_{y}O₂,
où M inclut un ou plusieurs éléments sélectionnés dans le groupe constitué de Co, Mn, Ni, Al, Fe, V, Zn, Cr, Ti, Ta, Mg, Mo, Zr, W, Sn, Hf, Nd et Gd,
où 0 < x ≤ 1,5, et
où 0 < y ≤1.

7. Électrode positive pour une batterie tout-solide, l'électrode positive comprenant :
le matériau actif d'électrode positive selon l'une quelconque des revendications 1 à 7 ;
un électrolyte solide à base de sulfure ; et
un matériau conducteur.

8. Batterie tout-solide comprenant :
l'électrode positive selon la revendication 8 ;
une électrode négative ; et
une couche d'électrolyte solide entre l'électrode positive et l'électrode négative.
